(19) Europäisches Patentamt
European Patent Office
Office européen des brevets

(11) **EP 3 792 590 B1**

(12) **EUROPÄISCHE PATENTSCHRIFT**

(45) Veröffentlichungstag und Bekanntmachung des Hinweises auf die Patenterteilung:
**26.01.2022 Patentblatt 2022/04**

(21) Anmeldenummer: **19197021.9**

(22) Anmeldetag: **12.09.2019**

(51) Internationale Patentklassifikation (IPC):
***G01C 9/28*** *(2006.01)*

(52) Gemeinsame Patentklassifikation (CPC):
**G01C 9/28**

(54) **LIBELLENFEINJUSTIERUNG**

LEVEL REFINEMENT

AJUSTEMENT FIN DE NIVEAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.03.2021 Patentblatt 2021/11**

(73) Patentinhaber: **Bayerische Mass-Industrie Arno Keller GmbH**
**91217 Hersbruck (DE)**

(72) Erfinder: **HUBERT, Ralf**
**90765 Fürth (DE)**

(74) Vertreter: **Götz, Gudrun Veronika**
**Intellectual Property IP-Götz**
**Patent- und Rechtsanwälte**
**Königstraße 70**
**90402 Nürnberg (DE)**

(56) Entgegenhaltungen:
**US-A- 4 335 524 US-A- 5 177 873**

EP 3 792 590 B1

**Beschreibung**

Die Erfindung betrifft eine Rotationseinrichtung für eine Libelle einer Messeinrichtung, insbesondere einer Wasserwaage, aufweisend einen Libellenkäfig zur Aufnahme der Libelle und ein Getriebe zur Rotation des Libellenkäfigs nach dem Oberbegriff des Anspruchs 1.

Die Erfindung betrifft außerdem gemäß Anspruch 13 eine Messeinrichtung, insbesondere eine Wasserwaage, mit einer solchen Rotationseinrichtung.

Wasserwaagen werden durch Auflegen mit ihrer Messfläche auf eine Unterlage meist verwendet, um zu prüfen, ob die vermessene Unterlage waagrecht oder senkrecht ausgerichtet ist. In diesem Fall muss die Libelle in der Wasserwaage parallel zu der Messfläche ausgerichtet werden. Soll jedoch an einer Unterlage ein bestimmter Neigungswinkel gegenüber der Waagrechten, z.B. 30°, eigenstellt oder geprüft werden, so muss die Libelle mit der Messfläche einen Winkel von 30° einschließen. Damit eine einzige Wasserwaage für verschieden geneigte Messflächen verwendbar ist, ist die Wasserwaage im Wasserwaagenkörper relativ zur Messfläche manuell oder mittels Werkzeug rotierbar ausgebildet.

Zum Messen und Übertragen von Winkeln ist es daher üblich, eine Wasserwaage mit einer drehbaren Libelle auszustatten. Im Stand der Technik werden die in einer gleitenden Führung gelagerten Libellen manuell, per Hand, gedreht. Hierbei kommt es zum sogenannten Slip-Stick-Effekt, zu Beginn der Drehung müssen höhere Reibungskräfte überwunden werden. Dies erschwert eine präzise Einstellung der Libelle.

Die Rotation der Libelle zur Anpassung an die zu messende oder einzustellende Neigung muss einerseits einfach und bequem erfolgen können. Andererseits ist eine unbeabsichtigte Rotation unerwünscht, weshalb Feststellmechanismen in der gewünschten Ausrichtung der Libelle vorzusehen sind. Aus dem Stand der Technik sind verschiedene Möglichkeiten bekannt, die Ausrichtung der Libelle bei geneigten Flächen zu verbessern.

Die US 5,177,589 A sieht vor, dass die Ausrichtung der Libelle veränderbar ist, indem sie zusammen mit der Fassung ausgetauscht wird. Durch einen Justiermechanismus erfolgt eine Zentrierung der Libelle. Es ist nicht vorgesehen, dass die Libelle über den Zentriervorgang hinaus gedreht wird.

In der WO 2012 / 092 611 A2 können einzelne Wasserwaagen zu einem Verbund zusammengesetzt werden. Dabei kann eine einzelne Wasserwaage durch verschiedene Befestigungsmittel (Schrauben, Nägel, Saugverbindungen, Magnetverbindungen) mit verschiedenen Winkeln an einem Werkstück befestigt werden. Ferner können verschiedene Justiervorrichtungen für translatorische oder rotatorische Justierbewegungen der gesamten Wasserwaage vorgesehen sein. Zusätzlich kann die Wasserwaage auch drehbare Libellen aufweisen.

Die US 4,335,524 A offenbart eine drehbare Libellenanordnung. Sie umfasst einen Magneten, der von einer Feder gegen einen metallischen Ring gedrückt wird, um eine unerwünschte Rotation der Libelle zu unterbinden. Zum Verstellen des Drehwinkels entlang einer Winkelskala löst der Benutzer den Magneten mit einer Schiebevorrichtung von dem Metallring.

Die WO 2017 / 100 054 A1 betrifft eine Libellenanordnung, bei der die Libelle mit ihrer Fassung innerhalb der Öffnung des Wasserwaagenkörpers drehbar ist, sodass die Ausrichtung der Libelle eine Vielzahl von Winkelpositionen relativ zu der Messfläche der Wasserwaage einnehmen kann. Unter Schutz gestellt werden soll, dass die Wasserwaage ein Feststellsystem mit einer Gewindeverbindung umfasst, bestehend aus einer Feststellschraube und einem Gewindekanal. Das Feststellsystem kann ferner eine Bremseinrichtung umfassen, die durch Drehen an der Feststellschraube eine kraftschlüssige und/oder reibschlüssige Verbindung mit der Fassung der Libelle ausbildet und so die Libelle in der gewünschten Position feststellt.

Die WO 1997 029 345 A1 zeigt eine Messvorrichtung zur Winkelbestimmung schiefer Ebenen, wobei die Messvorrichtung eine Sockelplatte zur Anlage an die schiefe Ebene und einen Libellenkörper aufweist. Durch manuelle Drehung eines Stellrades an einem ersten Abschnitt der Messvorrichtung ist ein zweiter Abschnitt der Messvorrichtung mit dem Libellenkörper um eine Achse relativ zum ersten Abschnitt kippbar. Die Kippen erfolgt durch Übersetzung der Drehbewegungen am Stellrad mittels Zahnrädern, wobei das Stellrad mit einer Rändelschraube verbunden sein kann. Die Ausrichtung kann an einer Skala abgelesen werden.

In der US 5,177,873 A ist eine drehbare Libelle beschrieben, die durch ein Stirnradgetriebe, d.h. durch das Zusammenwirken zweier Stirnräder um 360° gedreht werden kann. Dabei ist die Libelle mittig in einer Ausnehmung im größeren der beiden Stirnräder montiert. Durch Rotation des kleinen Stirnrades mit einem externen Hilfsmittel, bspw. einem Sechskantschlüssel, kann das große Zahnrad und damit die darin angeordnete Libelle gedreht werden.

Die im Stand der Technik gezeigte Vorrichtung bringt allerdings auch Nachteile mit sich. So ist bspw. bei rotierbaren Libellen oft ein separater Feststellmechanismus notwendig, um eine unbeabsichtigte Rotation zu vermeiden, was ein Übertragen eines einmal eingestellten Winkels unmöglich machen würde. Auch ist eine gradgenaue rein manuelle Einstellung eines bestimmten Neigungswinkels mühsam und oft nur mit einem Werkzeug möglich.

Es ist die Aufgabe der vorliegenden Erfindung, die Nachteile aus dem Stand der Technik zu eliminieren und eine Messeinrichtung zu schaffen, welche ermöglicht mit welcher ein bestimmter Neigungswinkel schnell, bequem und gleichzeitig genau eingestellt werden kann, der sich auch nicht unbeabsichtigt verstellen kann.

Die Aufgabe wird gelöst durch eine Rotationseinrichtung gemäß Anspruch 1 und eine Messeinrichtung, insbesondere eine Wasserwaage, mit einer solchen Rotationseinrichtung gemäß Anspruch 13 gelöst.

Eine erfindungsgemäße Vorrichtung der eingangs beschriebenen Art kennzeichnet sich durch eine Rotationseinrichtung für eine Libelle einer Messeinrichtung, insbesondere eine Wasserwaage, aufweisend einen Libellenkäfig zur Aufnahme der Libelle und ein Getriebe zur Rotation des Libellenkäfigs um eine zweite Rotationsachse. Dabei steht ein erstes Getriebeelement des Getriebes, mit einer ersten Rotationsachse zur Aufnahme einer Eingangskraft ausgebildet, in einer Wirkverbindung mit einem zweiten Getriebeelement, wobei das zweite Getriebeelement den Libellenkäfig koaxial bzgl. der zweiten Rotationsachse umgibt.

Erfindungsgemäß sind der Libellenkäfig und das zweite Getriebeelement relativ zueinander um die zweite Rotationsachse rotierbar gelagert.

Dadurch ist eine manuelle Grobjustierung und zusätzlich eine getriebeunterstützte Feinjustierung ermöglicht, wobei die Grobjustierung vorzugsweise durch eine gleitende Bewegung zwischen Libellenkäfig und dem zweiten Getriebeelement durchgeführt wird. Die Eingangskraft oder Antriebskraft auf das erste Getriebeelement des Getriebes kann manuell, per Hand oder auch elektrisch über einen Motor oder ähnliches angesteuert aufgebracht werden. Dabei dreht sich das erste Getriebeelement unter Einwirkung der Eingangskraft um die erste Rotationsachse, wobei eine Rotation in und gegen den Uhrzeigersinn grundsätzlich möglich ist. Das erste Getriebeelement steht in einer unmittelbaren oder mittelbaren Wirkverbindung mit mindestens einem zweiten Getriebeelement mit einer zweiten Rotationsachse, wobei insbesondere eine Kraft bzw. ein Drehmoment übertragen wird. Die Rotationsachse des Libellenkäfigs ist koaxial zur zweiten Rotationsachse des zweiten Getriebeelements oder fällt mit ihr zusammen. Grundsätzlich können zur getriebeunterstützten Feinjustierung der Libelle bzw. des Libellenkäfigs alle dem Fachmann bekannten Getriebearten verwendet werden, unter anderem auch solche, bei der die Rotationsachsen ersten Getriebeelements und mindestens eines weiteren zweiten Getriebeelements identisch sind oder zusammenfallen. Vorzugsweise ist sowohl durch die Grobjustierung, als auch durch die Feinjustierung die Libelle in der Messeinrichtung um bis zu 360° um die zweite Rotationsachse rotierbar. Typischerweise erfolgt die Grobausrichtung der Libelle auf einen gewünschten Winkel zunächst manuell mithilfe der Grobjustierung und anschließend erfolgt die Feinjustierung mithilfe des Getriebes. Dadurch kann die Libelle in der Messeinrichtung schnell und bequem, aber gleichzeitig auch genau ausgerichtet werden.

Vorteilhafte Ausführungsformen sind in den Unteransprüchen beansprucht und werden nachfolgend näher erläutert.

Ein vorteilhaftes Ausführungsbeispiel sieht vor, dass das erste Getriebeelement mittels einer einwirkenden Eingangskraft um die erste Rotationsachse rotierbar ist und bei Übertragung der Rotation von dem ersten Getriebeelement auf das zweite Getriebeelement ein Reibschluss zwischen dem zweiten Getriebeelement und dem Libellenkäfig ausgebildet ist, sodass das zweite Getriebeelement und der Libellenkäfig um die zweite Rotationsachse synchron rotieren.

Der Libellenkäfig ist unter Ausbildung einer kraftschlüssigen und/oder reibschlüssigen Verbindung in das zweite Getriebeelement eingesetzt. Wird das zweite Getriebeelement mithilfe des ersten Getriebeelements rotiert, rotiert der Libellenkäfig ebenfalls synchron. Die Reibschlussfläche zwischen dem Libellenkäfig und dem zweiten Getriebeelement ist rotationssymmetrisch ausgebildet bzw. verläuft entlang einer rotationssymmetrischen Lauffläche, sodass eine rotatorische Relativbewegung um die zweite Rotationsachse um bis zu 360° zwischen Libellenkäfig und dem zweiten Getriebeelement ermöglicht ist.

In einer bevorzugten Ausführungsform der Erfindung bewirkt ein Übersetzungsverhältnis zwischen dem ersten Getriebeelement und dem zweiten Getriebeelement bei Übertragung einer Rotation von dem ersten Getriebeelement mit einer ersten Drehzahl auf das zweite Getriebeelement eine zweite, niedrigere Drehzahl des zweiten Getriebeelements.

Als Übersetzungsverhältnis wird allgemein das Verhältnis der Drehzahlen von einem antreibenden Getriebeelement zu einem angetriebenen Getriebeelement beschrieben, also $i = n_{Antrieb}/n_{Abtrieb}$. Gemäß der bevorzugten Ausführungsform ist das Übersetzungsverhältnis vorzugsweise größer 1, also

$$i = \frac{n_{\text{erstes Getriebeelement}}}{n_{\text{zweites Getriebeelement}}} > 1$$

Das heißt, dass die Drehzahl des ersten Getriebeelements stets größer ist, als die Drehzahl des zweiten Getriebeelements. Insbesondere bei manueller Betätigung des ersten Getriebeelements sind damit Rotationsbewegungen um die erste Rotationsachse bequemer durchführbar, ohne das zweite Getriebeelement und damit den Libellenkäfig um die zweite Rotationsachse zu weit zu rotieren. Durch das Übersetzungsverhältnis, bei dem eine große Rotationsbewegung des ersten Getriebeelements eine kleinere Rotationsbewegung beim zweiten Getriebeelement bewirkt, kann auch eine geringfügige Veränderung des Rotationswinkels bzw. der Ausrichtung des Libellenkäfigs bequem erreicht werden.

In einer optionalen Weiterbildung ist bei Einwirken ein Eingangskraft auf das zweite Getriebeelement ein Schlupf zwischen dem zweiten Getriebeelement und dem Libellenkäfig ausgebildet.

Unter Eingangskraft auf das zweite Getriebeelement ist nicht die Kraft zu verstehen, die durch die Wirkverbindung zwischen dem ersten und dem zweiten Getriebeelement übertragbar ist, sondern vielmehr eine extern auf den Libellenkörper bzw. das zweite Getriebeelement aufgebrachte typischerweise manuelle Kraft. Der Libellenkäfig wird in seiner Position relativ zum zweiten Getriebeelements mithilfe der Haftreibung in Position gehalten, wobei zusätzlich ein so genannter Stick-Slip-Effekt vorkommen kann, bei dem die Haftreibung deutlich größer ist als die Gleitreibung. Das Getriebe der Rotationseinrichtung ist so ausgestaltet, dass sich bei Einwirkung einer Eingangskraft auf den Libellenkäfig und manueller Rotation des Libellenkäfigs um die zweite Rotationsrichtung ein Schlupf zwischen dem Libellenkäfig und dem zweiten Getriebeelement ausbildet, sodass der Libellenkäfig um die zweite Rotationsrichtung relativ zum zweiten Getriebeelement rotiert werden kann. Die manuelle Kraft ist die Eingangskraft oder Antriebskraft auf das zweite Getriebeelement. Diese manuelle Rotation kann wegen des Stick-Slip-Effekts als ruckartig wahrgenommen werden, was eine exakte Justierung der Ausrichtung in der Messeinrichtung unter Umständen mühsam werden lässt. Daher wirkt diese Ausführungsform der Erfindung besonders vorteilhaft zusammen mit der zuvor beschriebenen Feinjustierung. Im Gegensatz zur Feinjustierung wirkt die Eingangskraft bei der Grobjustierung nicht auf das erste Getriebeelement, sondern auf das zweite Getriebeelement. Durch Überschreiten der Haftreibung und Lösen des Reibschlusses findet jedoch keine Rotation des zweiten Getriebeelements, sondern lediglich des Libellenkäfig mit der darin enthaltenen Libelle statt.

Vorzugsweise ist ein Übersetzungsverhältnis zwischen dem ersten Getriebeelement und dem zweiten Getriebeelement so gewählt, dass bei Einwirken der Eingangskraft auf das zweite Getriebeelement eine Selbsthemmung des Getriebes eintritt.

Selbsthemmung heißt, dass ohne zusätzliche Halte- oder Stoppvorrichtungen bei Antrieb des zweiten Getriebeelements eine Rotation des ersten Getriebeelements verhindert oder zumindest wesentlich erschwert wird. Durch die geeignete Wahl des Übersetzungsverhältnisses, bspw. ein einem Bereich zwischen 50 und 120 wird die Notwendigkeit zusätzlicher Bauteile vermieden. Durch die Selbsthemmung kann der Reibschluss zwischen dem Libellenkäfig und dem zweiten Getriebeelement überwunden werden, es tritt der Schlupf auf. Dies gilt sogar dann, wenn wegen des auftretenden Stick-Slip-Effekts zwischen Libellenkäfig und dem zweiten Getriebeelement die manuelle Kraft zur Überwindung des Effekts groß sein muss. Die Selbsthemmung bewirkt einen Widerhalt für das zweite Getriebeelement zur Ermöglichung manueller Überwindung des Reibschlusses und Durchführung einer gleitenden Bewegung zur Grobjustierung.

Vorteilhafterweise beträgt das Übersetzungsverhältnis zwischen dem ersten Getriebeelement und dem zweiten Getriebeelement zwischen 50 und 120. Das heißt, dass 50-120 Umdrehungen des ersten Getriebeelements um die erste Rotationsachse eine Umdrehung des zweiten Getriebeelements und damit des Libellenkäfigs um die zweite Rotationsachse bewirken. Selbst eine vollständige Umdrehung des ersten Getriebeelements bewirkt damit nur 1/50 bis 1/120 einer vollständigen Umdrehung des zweiten Getriebeelements damit eine sehr exakte Feinjustierung.

In einer bevorzugten Ausführungsform der Erfindung ist das Getriebe als Schneckengetriebe mit dem ersten Getriebeelement als Schnecke und dem zweiten Getriebeelement als Stirnzahnrad oder Schneckenzahnrad ausgebildet, wobei die erste Rotationsachse senkrecht zur zweiten Rotationsachse ausgerichtet ist.

Bei einem Schneckengetriebe ist ein erstes schraubenförmiges oder schneckenartiges erstes Getriebeelement als Schnecke in einer Wirkverbindung, insbesondere in kämmendem Eingriff mit einem sogenannten Schneckenrad, einem Stirnzahnrad als zweitem Getriebeelement des Getriebes. Ein solches Schneckengetriebe ist einfach zu fertigen und kann raumsparend in der Messeinrichtung angeordnet werden. In einer beispielhaften Ausführung ist das Schneckenrad als Stirnzahnrad mit 72 oder 90 Zähnen ausgebildet, während die Schnecke ein 10er-Außengewinde zum kämmenden Eingriff mit dem Schneckenrad aufweist.

Vorzugsweise ist das erste Getriebeelement als Stellschraube mit einem Getriebeabschnitt und einem Bedienelement ausgebildet. Das Bedienelement ist bspw. eine Rändelschraube, an der das erste Getriebeelement manuell zwischen Daumen und Zeigefinger bewegt werden kann. Alternativ kann das Bedienelement bspw. als Schlitz zur Betätigung mit einer Münze oder einem Schraubendreher oder als Eingriff für einen 6-Kantschlüssel oder Ähnliches ausgebildet sein. Von diesem Bedienelement erstreckt sich das schneckenartige erste Getriebeelement als Welle mit einem Außengewinde, welches Außengewinde in Wirkverbindung oder in Eingriff mit dem Schneckenrad des zweiten Getriebeelements bringbar ist.

In einer optionalen Weiterbildung ist das ein Übersetzungsverhältnis zwischen der Schnecke und dem Schneckenrad so gewählt, dass bei Antrieb des Schneckenrads eine Selbsthemmung zwischen der Schnecke und dem Schneckenrad eintritt. Die Selbsthemmung einem Schneckengetriebe liegt vor, wenn durch eine auf das Schneckenrad einwirkende Kraft die Schnecke nicht bewegt wird. Vielmehr löst sich stattdessen der Reibschluss zwischen Libellenkäfig und Schneckenrad womit eine manuelle Grobjustierung ermöglicht wird. Die Selbsthemmung eines Schneckengetriebes wird vorzugsweise durch die Wahl eines geeigneten Steigungswinkels realisiert.

Zusätzlich kann die Libelle mit dem Libellenkäfig oder einem Teil des Libellenkäfigs einstückig ausgebildet sein. Damit können Bauteile eingespart und der Montageaufwand gesenkt werden. Alternativ ist eine mehrteilige Ausführung denkbar.

In einer bevorzugten Ausführungsform der Erfindung ist der Libellenkäfig als einteiliger oder mehrteiliger Käfigring ausgebildet.

Die Mehrteiligkeit kann bspw. durch ein oder mehr Ringelemente, Käfigringe, Halteelemente und/oder Glaskörper realisiert sein. Bspw. kann die Libelle in einem Glaskörper aufgenommen sein, der wiederum von Ringelementen oder Halteelemente gehalten und mit dem zweite Getriebeelement reibschlüssig verbunden wird. Dies ermöglicht eine einfache Montage einer Reibschlussverbindung zwischen Libellenkäfig und dem zweiten Getriebeelement, insbesondere dem Schneckenrad. Im Rahmen eines beispielhaften Montageverfahrens kann bspw. der erste Käfigring bereitgestellt und das zweite Getriebeelement, insbesondere das Schneckenrad, formschlüssig und/oder reibschlüssig aufgelegt werden. Anschließend verhindert ein Auflegen, Einschnappen oder Einrasten des zweiten Käfigrings auf den ersten Käfigring ein Verrutschen in axialer Richtung oder Lösen des Schneckenrads vom Libellenkäfig. Einzig ein Verdrehen zwischen dem zweiten Getriebeelement und dem Libellenkäfig relativ zueinander um die zweite Rotationsachse zur Grobjustierung ist noch möglich.

Vorzugsweise bilden der Libellenkäfig, insbesondere die beiden Käfigringe des Libellenkäfigs, eine von der Rotationsachse wegwärts gerichtete Umfangsfläche, die mit einer auf die Rotationsachse gerichteten radialen Lagerfläche des zweiten Getriebeelements mindestens eine Reibschlussfläche ausbildet.

Die Lagerfläche des zweiten Getriebeelements bildet vorzugsweise eine geschlossene rotationssymmetrische um die zweite Rotationsachse umlaufende Lauffläche, an der der Libellenkäfig bei der Grobjustierung eine vollständige 360 Gradumdrehung um die zweite Rotationsachse ausführen kann. Hierfür eignet sich insbesondere eine zu der zweiten Rotationsachse gerichtete Wandung des Schneckenrads. Auch die von der zweiten Rotationsachse wegwärts gerichtete Umfangsfläche des Libellenkäfigs kann eine vollständig umlaufende, rotationssymmetrische geschlossene Lauffläche ausbilden; alternativ kann sie jedoch auch nur abschnittsweise realisiert sein.

Zusätzlich können vorteilhafterweise der Libellenkäfig, insbesondere der Käfigring, mindestens eine zu der zweiten Rotationsachse senkrecht ausgerichtete Stirnfläche aufweisen, die mit mindestens einer senkrecht zu der zweiten Rotationsachse ausgerichteten axialen Lagerfläche des zweiten Getriebeelements mindestens eine Reibschlussfläche ausbildet. Dies ermöglicht einerseits eine Rotation des Libellenkäfigs bzw. des Käfigrings, gleichzeitig wird jedoch ein axiales verrutschen auf der zweiten Rotationsachse unterbunden und unerwünschtes Spiel verhindert, welches die Messung mit der Messeinrichtung verfälschen kann.

In einer optionalen Weiterbildung weisen die Käfigringe des Libellenkäfigs ein erstes Ringelement und ein zweites Ringelement auf, wobei die Ringelemente gemeinsam entlang ihres Umfangs eine Nut ausbilden, in der das zweite Getriebeelement reibschlüssig oder rotierbar gelagert ist.

Durch diese um die zweite Rotationsachse umlaufende Nut werden bspw. drei separate Reibschlussflächen oder Reibschlusswandungen bereitgestellt, womit ein unbeabsichtigtes Verdrehen des Libellenkäfigs relativ zum zweiten Getriebeelement unterbunden wird. Vielmehr ist eine bewusste manuelle Grobjustierung mit einem signifikanten manuellen Kraftaufwand erforderlich, um den Libellenkäfig zu rotieren. Ohne einen solchen Kraftaufwand ist der Libellenkäfig "festgestellt". Damit ist ein einmal eingestellter Rotationswinkel in der Messeinrichtung auf verschiedene zu messenden Unterlagen übertragbar.

Vorzugsweise kann ein Gehäuse zur Aufnahme der Rotationseinrichtung vorgesehen sein, wobei das Gehäuse als Modul in eine Messeinrichtung, insbesondere einen Wasserwaagenkörper einer Wasserwaage, einsetzbar ist.

Damit können bestehende Wasserwaagenmodelle mit einer solchen Rotationseinrichtung nachgerüstet werden. Auf einem solchen Gehäuse kann, bspw. eine Winkelskala angebracht sein, sodass je nach Ausrichtung des Libellenkäfigs bzw. der Libelle ein dazugehöriger Winkel, bspw. ein Neigungswinkel gegenüber einer Messfläche auf der Winkelskala ablesbar ist.

Eigenständiger Erfindungsschutz wird beansprucht für eine Messeinrichtung, insbesondere eine Wasserwaage, mit mindestens einer Rotationseinrichtung in einer der bereits beschriebenen Ausführungsformen, aufweisend einen Messkörper, insbesondere Wasserwaagenkörper, mit mindestens einer Messfläche und eine Libelle, wobei die Rotationseinrichtung von dem Messkörper der Messeinrichtung aufgenommen ist.

Eine solche Wasserwaage oder auch sonstige Richtwaage weist damit mindestens eine Libelle auf, die mithilfe eines Mechanismus zur Grobjustierung und eines Mechanismus zur Feinjustierung in ihrer Ausrichtung rotierbar ist. Sie kann damit relativ zu einer Auflagefläche oder Messfläche der Wasserwaage verschiedene Winkel einnehmen. Wird eine Wasserwaage mit ihrer Messfläche auf eine Unterlage aufgelegt und ist gleichzeitig die Libelle waagrecht ausgerichtet, so entspricht der Winkel, den Libelle mit der Messfläche einschließt, dem Neigungswinkel der Unterlage.

Vorzugsweise sind daher auf dem Wasserwaagenkörper, einem Gehäuse der Libelleneinheit oder einer sonstigen Abdeckung eine Anzeigevorrichtung, bspw. eine Winkelskala, zum Festlegen oder Bestimmen eines Neigungswinkels zwischen der Libelle und der Messfläche angeordnet.

Durch diese Winkelskala kann der Neigungswinkel zwischen der Libelle und der Unterlage abgelesen werden. Sollen insbesondere mehrere Unterlagen mit einem bestimmten Neigungswinkel bereitgestellt werden, so ist die Wasserwaage mit einer rotierbaren Libelle besonders gut geeignet, einen einmal eingestellten Neigungswinkel zu übertragen. Bspw. durch den Stick-Slip-Effekt in Verbindung mit einem selbsthemmenden Getriebe kann ein unbeabsichtigtes Verdrehen der Libelle ausgeschlossen werden, weshalb eine einmal gezielt eingestellte Ausrichtung der Libelle auf der Winkelskala erhalten bleibt.

In einer bevorzugten Ausführung der Wasserwaage ist das erste Getriebeelement als Stellschraube mit einem Getriebeabschnitt und einem Bedienelement ausgebildet und das Bedienelement ist im Wasserwaagenkörper versenkbar. Damit wird die Verletzungsgefahr des Bedieners und die Gefahr einer Beschädigung des Bedienelements reduziert. Bei Verwendung eines Vierkantrohres als Wasserwaagenkörper können alle Messflächen erhalten bleiben, also insbesondere Oberseite und Unterseite des Vierkantrohres.

Weitere Einzelheiten, Merkmale, Merkmals(unter)kombinationen, Vorteile und Wirkungen auf der Basis der Erfindung ergeben sich aus der nachfolgenden Beschreibung bevorzugter Ausführungsbeispiele der Erfindung und den Zeichnungen. Diese zeigen in

Fig. 1a eine perspektivische Darstellung in einer beispielhaften Ausführungsform der Erfindung, in

Fig. 1b eine weitere perspektivische Darstellung in einer beispielhaften Ausführungsform der Erfindung, in

Fig. 2 eine Seitenansicht einer Rotationseinrichtung in einer beispielhaften Ausführungsform der Erfindung, in

Fig. 3 eine Schnittdarstellung einer Rotationseinrichtung in einer beispielhaften Ausführungsform der Erfindung, in

Fig. 4a eine perspektivische Darstellung einer Rotationseinrichtung im Gehäuse in einer beispielhaften Ausführungsform der Erfindung, in

Fig. 4b eine perspektivische Darstellung einer Rotationseinrichtung im Gehäuse in einer beispielhaften Ausführungsform der Erfindung ohne Libelle, in

Fig. 5 eine perspektivische Darstellung einer ersten Wasserwaage in einer beispielhaften Ausführungsform der Erfindung, und in

Fig. 6 eine perspektivische Darstellung einer zweiten Wasserwaage in einer beispielhaften Ausführungsform der Erfindung.

Die Figuren sind lediglich beispielhafter Natur und dienen nur dem Verständnis der Erfindung. Die gleichen Elemente sind mit denselben Bezugszeichen versehen. Soweit nicht anders gekennzeichnet ist "axial" bezüglich der zweiten Rotationsachse, also der Rotationsachse der Libelle und/oder des zweiten Getriebeelements zu verstehen.

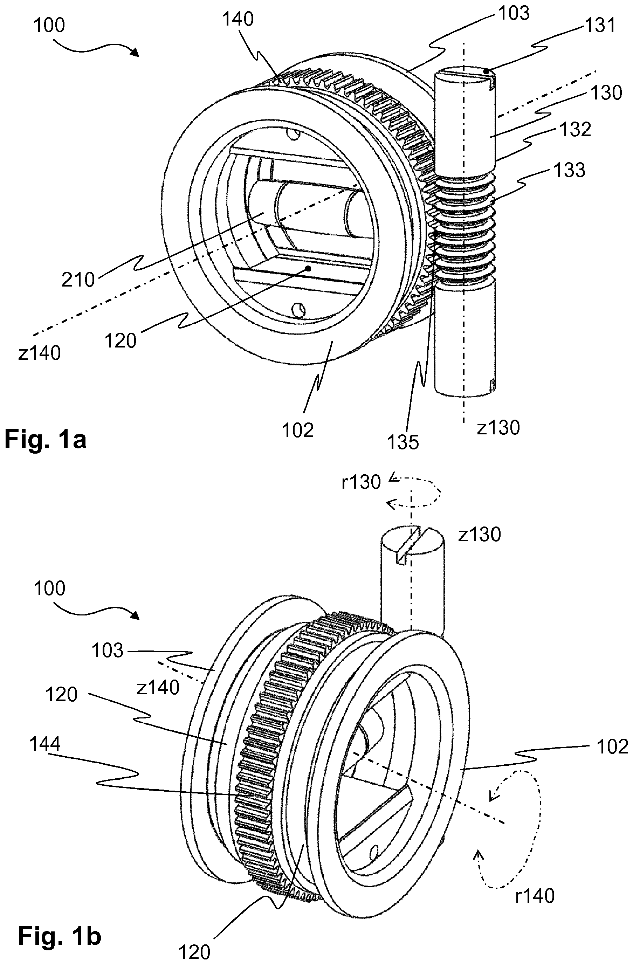

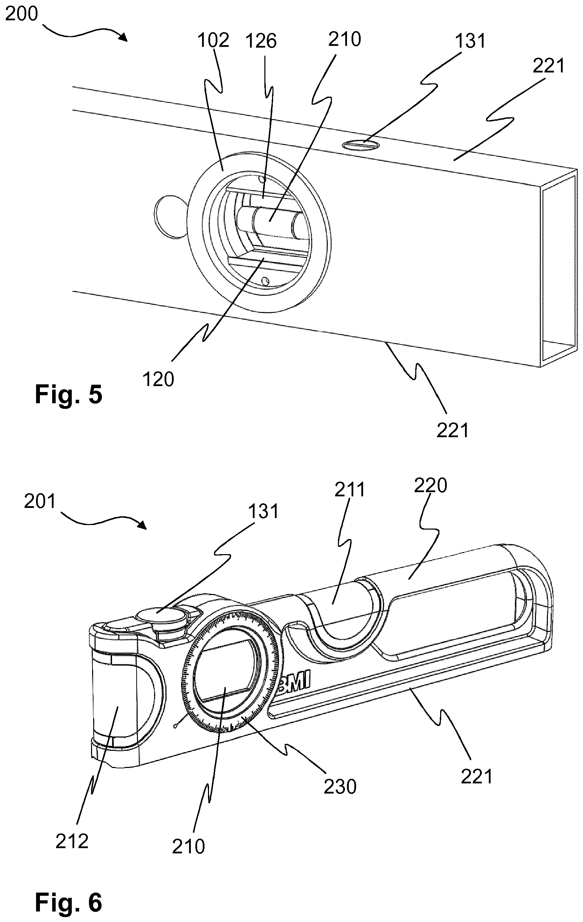

Fig. 1a und Fig. 1b zeigen die gleiche Rotationseinrichtung 100 in unterschiedlichen perspektivischen Darstellungen und werden gemeinsam beschrieben. Dargestellt ist eine erste Ausführungsform einer erfindungsgemäßen Rotationseinrichtung 100 zur Rotation einer Libelle 210 um eine zweite Rotationsachse $z_{140}$, sodass zum Einbau in eine Wasserwaage 200, 201 (vgl. Figur 5) oder eine sonstige Messeinrichtung eine rotierbare Libelle 210 zur Verfügung steht. Die Libelle 210 weist einen Libellenkäfig 120 auf. Die Libelle 210 kann mit dem Libellenkäfig 120 auch einstückig ausgebildet sein. Zur Rotation des Libellenkäfigs 120 ist in Getriebe vorgesehen mit einem ersten Getriebeelement 130 und einem zweiten Getriebeelement 140. In der dargestellten Ausführungsform ist das Getriebe als Schneckengetriebe ausgebildet.

Das erste Getriebeelement 130 ist als Schnecke dazu ausgebildet, eine Eingangskraft oder Antriebskraft durch den Benutzer an einem Bedienelement 131 aufzunehmen. Das erste Getriebeelement 130 ist als längliche Welle 132 ausgebildet, die an einem Mittelabschnitt ein Außengewinde 133 für kämmenden Eingriff 135 mit einem zweiten Getriebeelement 140, dem Schneckenrad aufweist. Das Außengewinde 133 kann sich alternativ auch über die gesamte Länge der Welle 132 erstrecken. Das Bedienelement 131 ist als Schlitz an einem ersten Endabschnitt oder eine Stirnseite der Welle 132 ausgebildet, sodass das erste Getriebeelement 130 um seine bzw. die erste Rotationsachse $z_{130}$ des ersten Getriebeelements 130 in einer ersten Rotationsrichtung $r_{130}$ rotierbar ist. Durch den kämmenden Eingriff 135 überträgt sich die Drehbewegung des ersten Getriebeelements 130 auf das zweite Getriebeelement 140, welches sich um eine zweite Rotationsachse $z_{140}$ in einer zweiten Rotationsrichtung $r_{140}$ dreht, wobei die zweite Rotationsachse $z_{140}$ senkrecht zur ersten Rotationsachse $z_{130}$ ausgerichtet ist. Das zweite Getriebeelement 140 dient als Schneckenrad zum Antrieb der Rotation der Libelle 210 um die zweite Rotationsachse $z_{140}$ und ist als Stirnzahnrad ausgebildet, welches entlang der äußeren Umfangsrichtung in gleichmäßigem Abstand Zähne 144 aufweist. Daher fällt die zweite Rotationsachse $z_{140}$ des zweiten Getriebeelements 140 mit der Rotationsachse der Libelle 210 zusammen. Die Libelle 210 bzw. der Libellenkäfig 210 und das zweite Getriebeelement 140 sind koaxial, also gleichachsig, ausgebildet. Diese Zähne 144 sind Wirkverbindung, also in kämmendem Eingriff 135 mit dem Außengewinde 133 ersten Getriebeelements 130.

Da sowohl das erste Getriebeelement 130, als auch das zweite Getriebeelement 140 sowohl im als auch gegen den Uhrzeigersinn rotierbar sind, kann auch die Libelle 210 oder der Libellenkäfig sowohl in als auch gegen den Uhrzeigersinn rotiert werden. Die Rotationsrichtungen $r_{130}$ und $r_{140}$ sind daher als Doppelpfeil dargestellt. Typischerweise resultiert eine Rotation des ersten Getriebeelements 130 im Uhrzeigersinn in einer Rotationsbewegung des zweiten Getriebeelements 140 entgegen dem Uhrzeigersinn und umgekehrt. Die Rotation kann durch den Bediener durchgeführt werden, bis eine gewünschte Ausrichtung der Libelle 210 bzw. des Libellenkäfigs 120 erreicht ist. Eine solche Ausrichtung ist an einer Winkelskala (vgl. Fig. 6) anzeigbar, die bspw. auf einer ersten Abdeckung 102 und/oder auf einer zweiten Abdeckung 103 der Rotationseinrichtung 100 aufgetragen ist.

Der Libellenkäfig 120 ist im zweiten Getriebeelement 140 nur durch einen Reibschluss gehalten und somit relativ zum zweiten Getriebeelement 140 um die zweite Rotationsachse $z_{140}$ in oder entgegen der zweiten Rotationsrichtung $r_{140}$ rotierbar gelagert.

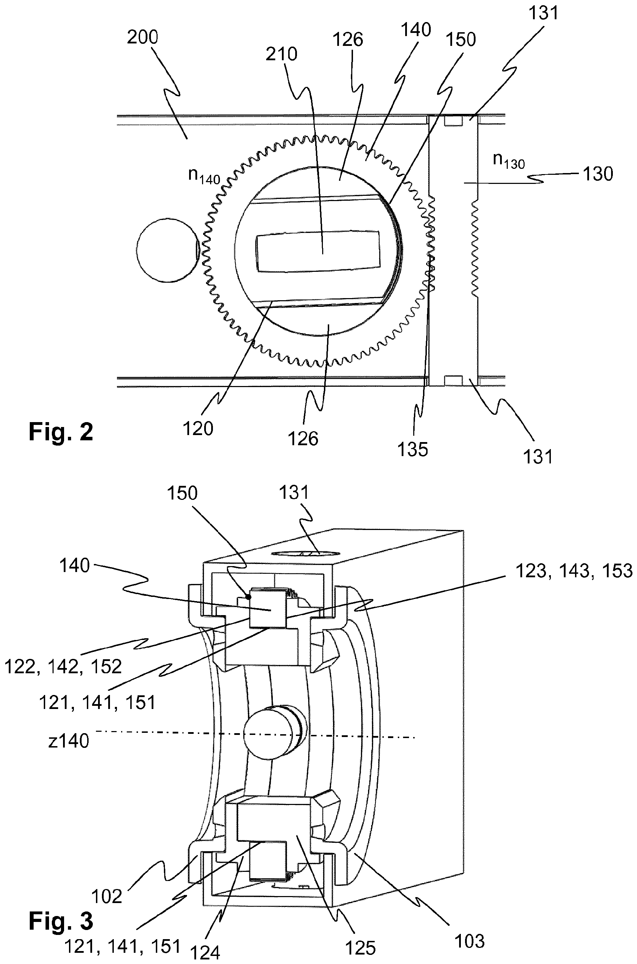

Figur 2 zeigt eine Seitenansicht des Getriebes mit dem ersten Getriebeelement 130, welches in kämmendem Eingriff 135 mit dem zweiten Getriebeelements140 steht. Das Getriebe ist in einer Wasserwaage 200 zusammen mit einem Libellenkäfig 120 und einer Libelle 210 angeordnet, wobei der Libellenkäfig 120 durch einen Zwischenraum 126 zwischen Libellenkäfig 120 und dem zweiten Getriebeelement 140 manuell ergriffen und rotiert werden kann. Zwischen dem Libellenkäfig 120 und dem zweiten Getriebeelement 140 ist eine Reibschlussfläche 150 (vgl. Fig. 3) vorgesehen, die derart ausgebildet ist, dass der Libellenkäfig 120 eine Rotationsbewegung in oder entgegen einer zweiten Rotationsrichtung $r_{140}$ um eine zweite Rotationsachse $z_{140}$ (vgl. Figuren 1a, 1b) relativ zum zweiten Getriebeelement 140 ausführen kann. Das Übersetzungsverhältnis i als

$$i = \frac{n_{130}}{n_{140}}$$

beschrieben, wobei $n_{130}$ die Drehzahl des ersten Getriebeelements 130 und $n_{140}$ die Drehzahl des zweiten Getriebeelements 140 ist. Das Übersetzungsverhältnis i ist stets größer 1, sodass eine graduelle Feinjustierung der Ausrichtung der Libelle 210 ermöglicht ist. Das Übersetzungsverhältnis i liegt dabei vorzugsweise in einem Bereich zwischen 50 und 120. Durch das Übersetzungsverhältnis beim kämmenden Eingriff 135 zwischen dem zweiten Getriebeelement 140 und dem ersten Getriebeelement 130 tritt eine Selbsthemmung ein, sodass das zweite Getriebeelement 140 das erste Getriebeelement 130 nicht anzutreiben vermag. Ist die manuell aufgewendete Kraft auf den Libellenkäfig 120 schließlich groß genug, wird der Reibschluss 150 gelöst und der Libellenkäfig 120 ist zusammen mit der Libelle 210 relativ zum zweiten Getriebeelement 140 verdrehbar. Umgekehrt lässt sich bei Ausübung einer Eingangskraft auf das erste Getriebeelement 130, welches vorzugsweise beidseitig ein Bedienelement 131 aufweist, auch das zweite Getriebeelement 140 rotieren. Vorausgesetzt der Bediener hält den Libellenkäfig 120 nicht zwischen den Händen fest, rotieren das zweite Getriebeelement 140 und der Libellenkäfig 120 zur Feinjustierung durch Ausbildung der Reibschlussverbindung synchron miteinander.

Figur 3 zeigt die Ausbildung des Reibschluss 150 anhand einer Schnittansicht durch eine Rotationseinrichtung 100 in einem Wasserwaagenkörper 200. Der Libellenkäfig 120 kann ein erstes Ringelement 124 und ein zweites Ringelement 125 aufweisen. Bei Montage des Libellenkäfigs 120 können diese als Bestandteil der Käfigringe aneinander angelegt, eingesteckt, aufgeklebt oder sonst wie miteinander verbunden werden. Dabei bilden eine erste axiale Stirnfläche 122 des ersten Ringelements 124, die senkrecht zur zweiten Rotationsachse $z_{140}$ ausgerichtet ist, eine zweite axiale Stirnfläche 123 des zweiten Ringelements 125, die ebenfalls senkrecht zur zweiten Rotationsachse $z_{140}$ ausgerichtet ist und die von der zweiten Rotationsachse $z_{140}$ radial nach außen gerichtete Umfangsfläche 121 eine Nut aus, in der das zweite Getriebeelements 140 reibschlüssig und/oder formschlüssig aufgenommen ist. Der Reibschluss 150 bildet sich aus der erste axialen Stirnfläche 122 ersten Ringelements 124 mit einer ersten axialen Lagerfläche 142 des zweiten Getriebeelements 140 und/oder der zweiten axialen Stirnfläche 123 des zweiten Ringelements 125 mit einer zweiten axialen Lagerfläche 143 des zweiten Getriebeelements 140 und/oder der Umfangsfläche 121 mit der radialen Lagerfläche 141 des zweiten Getriebeelements 140. Die Umfangsfläche 121 kann dem ersten Ringelement 124 und/oder dem zweiten Ringelement 125 zugehörig sein.

In anderen Worten, die erste axiale Stirnfläche 122 des ersten Ringelements 124 bildet mit der ersten axialen Lagerfläche 142 des zweiten Getriebeelements 140 die erste axiale Reibschlussfläche 152, die zweite axiale Stirnfläche 123 des zweiten Ringelements 125 bildet mit der zweiten axialen Lagerfläche 143 des zweiten Getriebeelements 140 die zweite axiale Reibschlussfläche 153, und die Umfangsfläche 121 bildet mit der radialen Lagerfläche 141 des zweiten Getriebeelements 140 mindestens eine zusätzliche radiale Reibschlussfläche 151. Alle drei Reibschlussflächen 151, 152, 153 wirken zusammen zur Ausbildung eines Reitschlusses 150. Die Lagerflächen 141, 142 und 143 müssen für eine vollständige Rotation um 360° um die zweite Rotationsachse z140 im Wesentlichen rotationsymmetrisch umlaufend ausgebildet sein. Hierfür ist ein als Stirnzahnrad oder Schneckenrad ausgebildetes zweites Getriebeelement 140 mit einer kreisförmigen Ausnehmung grundsätzlich geeignet. Hingegen müssen die Umfangsflächen 121 bzw. axialen Stirnflächen 122, 123 nur abschnittsweise derart ausgebildet sein, dass sie die Lagerflächen 141, 142, 143 vollständig ausnutzen können. Die durch den Libellenkäfig 120 gebildete Nut kann umlaufen, muss aber nicht. Der Libellenkäfig 120 selbst kann durch zusätzliche Abdeckungen 102, 103 oder sonstige ab Halteelemente im Wasserwaagenkörper 200 gehalten werden. Die manuelle Rotation des Libellenkäfigs 120 zur Grobjustierung kann auch durch Ergreifen der Abdeckungen 102,103 mit der Hand des Bedieners erfolgen.

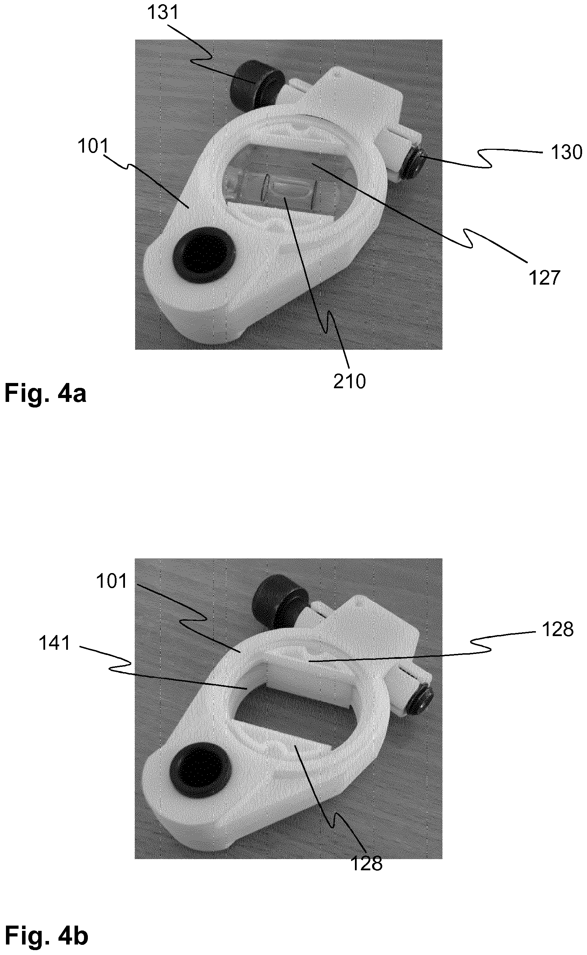

Figur 4a zeigt eine Rotationseinrichtung 100 (vgl. z.B. Fig. 1a), die von einem Gehäuse 101 eingeschlossen ist. Durch das Gehäuse 101 ist ein modulartiger Aufbau realisiert, wobei das Modul eine Stellschraube als erstes Getriebeelement 130 mit einem Schraubenkopf als Bedienelement 131 aufweist. Durch Rotation des ersten Getriebeelements 130 ist der Libellenkäfig 120 rotierbar. Der Libellenkäfig 120 kann einteilig oder mehrteilig ausgeführt sein. Diese Mehrteiligkeit kann durch einen Glaskörper 127 realisiert sein, der die Libelle 210 vollständig umgibt. Der Glaskörper 127 wiederum kann gemäß Figur 4b von einem oder mehr Halteelementen 128 des Libellenkäfigs 120 gehalten werden. Figur 4b zeigt ein solches Modul, wobei Libelle 210 und Glaskörper 127 ausgeblendet sind, sodass die radiale Lagerfläche 141 des zweiten Getriebeelements 140 und zusätzliche Halteelemente 128 zu sehen sind. Grundsätzlich können Libelle 210 und Libellenkörper 120, der Libellenkörper 120 wiederum aufweisend mindestens einen Glaskörper 127 und Halteelemente 128, einstückig ausgebildet sein.

Figur 5 zeigt eine Wasserwaage 200 mit einer Libelle 210 und einem Wasserwaagenkörper 220 als Messkörper, der als Vierkantrohr ausgebildet ist und somit prinzipiell bis zu vier Messflächen 221 zur Verfügung stellt. Das Bedienelement 131 für das erste Getriebeelement 130 ist mittels einer Münze, einem schlitzförmigen Schraubendreher oder einem sonstigen Antriebsmittel im Rahmen der Feinjustierung bedienbar. Dadurch kann das Bedienelement 131 im Wasserwaagenkörper 220 versenkt werden, sodass keine Messfläche 221 verloren geht. Im Rahmen der Grobjustierung kann die Libelle 210 in einem Zwischenraum 126 zwischen Libellenkäfig 120 und dem zweiten Getriebeelement 140 oder an dem Abdeckring der Abdeckung 102 ergriffen und rotiert werden.

Figur 6 zeigt eine alternative Wasserwaage 201 mit erhöhter Funktionalität, bspw. mit einem Handgriff 221. Ferner sind neben der rotierbaren Libelle 210 eine weitere Horizontallibelle 211 und eine Vertikallibelle 212 bzw. eine Kopflibelle an der Wasserwaage 201 vorhanden. Die Einrichtung zur Feinjustierung ist an einer Rändelschraube als Bedienelement 131 bedienbar. Der Neigungswinkel der Libelle 210 gegenüber der Messfläche 221 kann an einer Winkelskala 230 abgelesen werden. Da ein unbeabsichtigtes Rotieren der Libelle 210 durch die großflächige Ausbildung des Reitschlusses 150 (vgl. Figur 3) und vorzugsweise ein geeignetes Übersetzungsverhältnis i des Getriebes vermieden werden kann, ist ein zusätzlicher Feststellmechanismus entbehrlich. Ein einmal so eingestellter Winkel bzw. eine solche Neigung kann auf verschiedene Unterlagen übertragen werden.

## Bezugszeichenliste

| | |
|---|---|
| 100 | Rotationseinrichtung |
| 102 | erste Abdeckung |
| 103 | zweite Abdeckung |
| 120 | Libellenkäfig |
| 121 | Umfangsfläche |
| 122 | erste axiale Stirnfläche |
| 123 | zweite axiale Stirnfläche |
| 124 | erstes Ringelement |
| 125 | zweites Ringelement |
| 126 | Zwischenraum |
| 127 | Glaskörper |
| 128 | Halteelemente |
| 130 | erstes Getriebeelement, insbesondere Schnecke |
| 131 | Bedienelement |
| 132 | Welle |
| 133 | Außengewinde |
| 135 | Kämmender Eingriff |
| 140 | zweites Getriebeelement, insbesondere Schneckenrad |
| 141 | radiale oder innere Lagerfläche |
| 142 | erste axiale Lagerfläche |
| 143 | zweite axiale Lagerfläche |
| 144 | Zähne |
| 150 | Reibschluss |
| 151 | radiale Reibschlussfläche |
| 152 | erste axiale Reibschlussfläche |
| 153 | zweite axiale Reibschlussfläche |
| 200 | erste Messeinrichtung, insbesondere Wasserwaage |
| 201 | zweite Messeinrichtung, insbesondere Wasserwaage |
| 210 | Libelle |
| 220 | Messkörper, insbesondere Wasserwaagenkörper |
| 221 | Messfläche |
| 230 | Anzeigevorrichtung, insbesondere Winkelskala |
| i | Übersetzungsverhältnis |
| $n_{130}$ | erste Drehzahl |
| $n_{140}$ | zweite Drehzahl |
| $r_{130}$ | erste Rotationsrichtung |
| $r_{140}$ | zweite Rotationsrichtung |
| $z_{130}$ | erste Rotationsachse |
| $z_{140}$ | zweite Rotationsachse |

## Patentansprüche

1. Rotationseinrichtung (100) für eine Libelle (210) einer Messeinrichtung (200, 201), insbesondere einer Wasserwaage, aufweisend einen Libellenkäfig (120) zur Aufnahme der Libelle (210) und ein Getriebe zur Rotation des Libellenkäfigs (120) um eine zweite Rotationsachse ($z_{140}$), wobei

   - ein erstes Getriebeelement (130) des Getriebes mit einer ersten Rotationsachse ($z_{130}$) zur Aufnahme einer Eingangskraft ausgebildet ist und in einer Wirkverbindung steht
   - mit einem zweiten Getriebeelement (140) des Getriebes, wobei das zweite Getriebeelement (140) den Libellenkäfig (120) koaxial bzgl. der

zweiten Rotationsachse ($z_{140}$) umgibt,

**dadurch gekennzeichnet, dass**
der Libellenkäfig (120) und das zweite Getriebeelement (140) relativ zueinander um die zweite Rotationsachse ($z_{140}$) rotierbar gelagert sind.

2. Rotationseinrichtung (100) nach Anspruch 1, **dadurch gekennzeichnet, dass**
das erste Getriebeelement (130) mittels einer auf dieses einwirkenden Eingangskraft um die erste Rotationsachse ($z_{130}$) rotierbar ist, und bei Übertragung einer resultierenden Rotation von dem ersten Getriebeelement (130) auf das zweite Getriebeelement (140) ein Reibschluss (150) zwischen dem zweiten Getriebeelement (140) und dem Libellenkäfig (120) ausgebildet ist.

3. Rotationseinrichtung (100) nach Anspruch 1 oder 2, **dadurch gekennzeichnet, dass**
ein Übersetzungsverhältnis (i) zwischen dem ersten Getriebeelement (130) und dem zweiten Getriebeelement (140) bei Übertragung einer Rotation von dem ersten Getriebeelement (130) mit einer ersten Drehzahl ($n_{130}$) auf das zweite Getriebeelement (140) eine zweite, niedrigere Drehzahl ($n_{140}$) des zweiten Getriebeelements (140) bewirkt.

4. Rotationseinrichtung (100) nach einem der vorhergehenden Ansprüche, **dadurch gekennzeichnet, dass**
das zweite Getriebeelement (140) mittels einer auf dieses einwirkenden Eingangskraft um die zweite Rotationsachse ($z_{140}$) rotierbar ist und bei Übertragung einer resultierenden Rotation von dem zweiten Getriebeelement (140) auf das erste Getriebeelement (130) ein Schlupf zwischen dem zweiten Getriebeelement (140) und dem Libellenkäfig (120) ausgebildet ist.

5. Rotationseinrichtung (100) nach einem der vorhergehenden Ansprüche, **dadurch gekennzeichnet, dass**
ein Übersetzungsverhältnis (i) zwischen dem ersten Getriebeelement (130) und dem zweiten Getriebeelement (140) bei Übertragung einer Rotation von dem ersten Getriebeelement (130) mit einer ersten Drehzahl ($n_{130}$) auf das zweite Getriebeelement (140) eine zweite Drehzahl ($n_{140}$) des zweiten Getriebeelements (140) bewirkt und das Übersetzungsverhältnis (i) zwischen dem ersten Getriebeelement (130) und dem zweiten Getriebeelement (140) so gewählt ist, dass bei Einwirken der Eingangskraft auf das zweite Getriebeelement (140) eine Selbsthemmung des Getriebes eintritt.

6. Rotationseinrichtung (100) nach einem der Ansprüche 3 bis 5, **dadurch gekennzeichnet, dass**

das Übersetzungsverhältnis (i) zwischen dem ersten Getriebeelement (130) und dem zweiten Getriebeelement (140) in einem Bereich zwischen 50 und 120 liegt.

7. Rotationseinrichtung (100) nach einem der vorhergehenden Ansprüche, **dadurch gekennzeichnet, dass**
das Getriebe als Schneckengetriebe mit dem ersten Getriebeelement (130) als Schnecke, insbesondere als Stellschraube mit einem Getriebeabschnitt (132, 133) und einem Bedienelement (131), und dem zweiten Getriebeelement (140) als Schneckenrad ausgebildet ist, wobei die erste Rotationsachse ($z_{130}$) der Schnecke senkrecht zur zweiten Rotationsachse ($z_{140}$) des Schneckenrads ausgerichtet ist.

8. Rotationseinrichtung (100) nach einem der vorhergehenden Ansprüche, **dadurch gekennzeichnet, dass**
ein Übersetzungsverhältnis (i) zwischen der Schnecke (130) und dem Schneckenrad (140) so gewählt ist, dass bei Antrieb des Schneckenrads (140) eine Selbsthemmung zwischen der Schnecke (130) und dem Schneckenrad (140) eintritt.

9. Rotationseinrichtung (100) nach einem der vorhergehenden Ansprüche, **dadurch gekennzeichnet, dass**
der Libellenkäfig (120) als einteiliger oder mehrteiliger Käfigring ausgebildet ist.

10. Rotationseinrichtung (100) nach Anspruch 9, **dadurch gekennzeichnet, dass**
der Libellenkäfig (120), insbesondere der Käfigring, eine von der zweiten Rotationsachse ($z_{140}$) radial nach außen gerichtete Umfangsfläche (121) aufweist, die mit einer auf die zweite Rotationsachse ($z_{140}$) radial nach innen oder inneren gerichteten radialen Lagerfläche (141) des zweiten Getriebeelements (140) mindestens eine radiale Reibschlussfläche (151) ausbildet.

11. Rotationseinrichtung (100) nach einem der Ansprüche 9 oder 10, **dadurch gekennzeichnet, dass**
der Käfigring des Libellenkäfigs (120) ein erstes Ringelement (124) und ein zweites Ringelement (125) aufweist, wobei die Ringelemente (124, 125) gemeinsam entlang einer Umfangsfläche (121) eine Nut ausbilden, in der das zweite Getriebeelement (140) reibschlüssig gelagert ist.

12. Rotationseinrichtung (100) nach einem der vorhergehenden Ansprüche, **dadurch gekennzeichnet, dass**
die Rotationseinrichtung (100) ein Gehäuse (101) zur Aufnahme der Rotationseinrichtung (100) aufweist, wobei das Gehäuse (101) modular in eine Messeinrichtung (200, 201), insbesondere einen Wasserwaagenkörper (220) einer Wasserwaage, einsetzbar ist.

13. Messeinrichtung (200, 201), insbesondere Wasserwaage, mit mindestens einer Rotationseinrichtung (100) nach einem der Ansprüche 1-12, aufweisend einen Messkörper (220), insbesondere einen Wasserwaagenkörper (220), mit mindestens einer Messfläche (221) und mindestens einer Libelle (210), wobei die Rotationseinrichtung (100) von dem Messkörper (220) der Messeinrichtung (200, 201) aufgenommen ist.

14. Messeinrichtung (200, 201) nach Anspruch 13,
    **dadurch gekennzeichnet, dass**
    auf dem Messkörper (220), einem Gehäuse (101) der Rotationseinrichtung (100), einem Libellenkäfig (120) und/oder einer sonstigen Abdeckung (102, 103) eine Anzeigevorrichtung (230), bspw. eine Winkelskala, zum Festlegen oder Bestimmen eines Neigungswinkels zwischen der Libelle (210) und der Messfläche (221) angeordnet ist.

15. Messeinrichtung (200, 201) nach Anspruch 13 oder 14,
    **dadurch gekennzeichnet, dass**
    das erste Getriebeelement (130) der Rotationseinrichtung (100) als Stellschraube mit einem Getriebeabschnitt (132, 133) und einem Bedienelement (131) ausgebildet ist und das Bedienelement (131) im Messkörper (220) der Messeinrichtung (200) versenkbar ausgebildet ist.

**Claims**

1. A rotation device (100) for a bubble level (210) of a measuring device (200, 201), in particular a spirit level, having a bubble level cage (120) for receiving the bubble level (210) and a gear for rotating the bubble level cage (120) about a second axis of rotation ($z_{140}$), wherein

   - a first gear element (130) of the gear is designed with a first axis of rotation ($z_{130}$) for receiving an input force and is in operative connection
   - with a second gear element (140) of the gear, wherein the second gear element (140) surrounds the bubble level cage (120) coaxially in respect of the second axis of rotation ($z_{140}$),

   **characterised in that**
   the bubble level cage (120) and the second gear element (140) are stored rotatable relative to one another about the second axis of rotation ($z_{140}$).

2. The rotation device (100) according to claim 1,
   **characterised in that**
   the first gear element (130) can be rotated about the first axis of rotation ($z_{130}$) by means of an input force acting on said element, and a frictional engagement (150) is developed between the second gear element (140) and the bubble level cage (120) upon transmission of a resulting rotation from the first gear element (130) to the second gear element (140).

3. The rotation device (100) according to claim 1 or 2,
   **characterised in that**
   upon transmission of a rotation from the first gear element (130) with a first rotational speed ($n_{130}$) to the second gear element (140), a gear ratio (i) between the first gear element (130) and the second gear element (140) causes a second, lower rotational speed ($n_{140}$) of the second gear element (140).

4. The rotation device (100) according to one of the preceding claims,
   **characterised in that**
   the second gear element (140) can be rotated about the second axis of rotation ($z_{140}$) by means of an input force acting on said element, and a slip is developed between the second gear element (140) and the bubble level cage (120) upon transmission of a resulting rotation from the second gear element (140) to the first gear element (130).

5. The rotation device (100) according to one of the preceding claims, **characterised in that**
   upon transmission of a rotation from the first gear element (130) with a first rotational speed ($n_{130}$) to the second gear element (140), a gear ratio (i) between the first gear element (130) and the second gear element (140) causes a second rotational speed ($n_{140}$) of the second gear element (140), and the gear ratio (i) between the first gear element (130) and the second gear element (140) is chosen such that, when the input force acts on the second gear element (140), the gear self-locks.

6. The rotation device (100) according to one of claims 3 to 5,
   **characterised in that**
   the gear ratio (i) between the first gear element (130) and the second gear element (140) lies in a range between 50 and 120.

7. The rotation device (100) according to one of the preceding claims, **characterised in that**
   the gear is designed as a worm gear with the first gear element (130) as the auger, in particular as a regulating screw with a gear section (132, 133) and an operating element (131), and the second gear element (140) is designed as a worm wheel, wherein the first axis of rotation ($z_{130}$) of the auger is aligned perpendicular to the second axis of rotation ($z_{140}$) of the worm wheel.

8. The rotation device (100) according to one of the preceding claims, **characterised in that** a gear ratio (i) between the auger (130) and the worm wheel (140) is chosen such that the auger (130) and the wheel (140) self-lock when the worm wheel (140) is driven.

9. The rotation device (100) according to one of the preceding claims, **characterised in that** the bubble level cage (120) is designed as a single-part or multi-part cage ring.

10. The rotation device (100) according to claim 9, **characterised in that** the bubble level cage (120), in particular the cage ring, has a peripheral surface (121) directed radially outward from the second axis of rotation ($z_{140}$), which surface forms, with a bearing surface (141) of the second gear element (140) which is directed radially inwards or inwardly-directed radially to the second axis of rotation ($z_{140}$), at least one radial frictional engagement surface (151).

11. The rotation device (100) according to one of claims 9 or 10, **characterised in that** the cage ring of the bubble level cage (120) has a first ring element (124) and a second ring element (125), wherein the ring elements (124, 125) form, together along a peripheral surface (121), a channel in which the second gear element (140) is stored, frictionally engaged.

12. The rotation device (100) according to one of the preceding claims, **characterised in that** the rotation device (100) has a housing (101) for receiving the rotation device (100), wherein the housing (101) can be inserted modularly into a measuring device (200, 201), in particular a spirit level body (220) of a spirit level.

13. A measuring device (200, 201), in particular a spirit level, with at least one rotation device (100) according to one of claims 1-12, having a measuring head (220), in particular a spirit level body (220), with at least one measuring surface (221) and at least one bubble level (210), wherein the rotation device (100) is received by the measuring body (220) of the measuring device (200, 201).

14. The measuring device (200, 201) according to claim 13, **characterised in that** a housing (101) of the rotation device (100), a bubble level cage (120) and/or a miscellaneous cover (102, 103), a display device (230), e.g. an angular scale for establishing or determining an angle of inclination between the bubble level (210) and the measuring surface (221), is arranged ion the measuring head (220).

15. The measuring device (200, 201) according to claim 13 or 14, **characterised in that** the first gear element (130) of the rotation device (100) is designed as a regulating screw with a gear section (132, 133) and an operating element (131), and the operating element (131) is designed to be capable of being lowered in the measuring head (220) of the measuring device (200).

**Revendications**

1. Dispositif de rotation (100) pour un niveau à bulle d'air (210) d'un dispositif de mesure (200, 201), en particulier d'un niveau d'eau, comprenant une cage de niveau à bulle d'air (120) pour recevoir le niveau à bulle d'air (210) et une transmission pour faire tourner la cage de niveau à bulle d'air (120) autour d'un deuxième axe de rotation ($z_{140}$), dans lequel

    - un premier élément de transmission (130) de la transmission est conçu avec un premier axe de rotation ($z_{130}$) pour recevoir une force d'entrée et est dans une connexion fonctionnelle
    - avec un deuxième élément de transmission (140) de la transmission, dans lequel le deuxième élément de transmission (140) entoure la cage de niveau à bulle d'air (120) de manière coaxiale par rapport au deuxième axe de rotation ($z_{140}$),

    **caractérisé en ce que** la cage de niveau à bulle d'air (120) et le deuxième élément de transmission (140) sont montés de manière rotative l'un par rapport à l'autre autour du deuxième axe de rotation ($z_{140}$).

2. Dispositif de rotation (100) selon la revendication 1, **caractérisé en ce que** le premier élément de transmission (130) peut être mis en rotation autour du premier axe de rotation ($z_{130}$) au moyen d'une force d'entrée agissant sur lui, et lorsqu'une rotation résultante est transmise du premier élément de transmission (130) au second élément de transmission (140), une connexion par friction (150) est formée entre le second élément de transmission (140) et la cage de niveau à bulle d'air (120).

3. Dispositif de rotation (100) selon la revendication 1

21    EP 3 792 590 B1    22

ou 2,
**caractérisé en ce que**
un rapport de transmission (i) entre le premier élément de transmission (130) et le second élément de transmission (140) provoque sur le second élément de transmission (140) une seconde vitesse de rotation inférieure ($n_{140}$) du second élément de transmission (140) lorsqu'une rotation est transmise du premier élément de transmission (130) à une première vitesse de rotation ($n_{130}$).

4. Dispositif de rotation (100) selon l'une quelconque des revendications précédentes,
   **caractérisé en ce que**
   le second élément de transmission (140) peut tourner autour du second axe de rotation ($z_{140}$) au moyen d'une force d'entrée agissant sur celui-ci, et lors de la transmission d'une rotation résultant du second élément de transmission (140) au premier élément de transmission (130), un glissement est formé entre le second élément de transmission (140) et la cage de niveau à bulle d'air (120).

5. Dispositif de rotation (100) selon l'une quelconque des revendications précédentes,
   **caractérisé en ce que**
   un rapport de transmission (i) entre le premier élément de transmission (130) et le second élément de transmission (140) provoque une seconde vitesse ($n_{140}$) du second élément de transmission (140) lorsqu'une rotation est transmise du premier élément de transmission (130) à une première vitesse ($n_{130}$) au second élément de transmission (140), et le rapport de transmission (i) entre le premier élément de transmission (130) et le second élément de transmission (140) est sélectionné de telle sorte que lorsque la force d'entrée agit sur le second élément de transmission (140), il se produit un auto blocage de la transmission.

6. Dispositif de rotation (100) selon l'une quelconque des revendications 3 à 5,
   **caractérisé en ce que**
   le rapport de transmission (i) entre le premier élément de transmission (130) et le second élément de transmission (140) est dans une plage comprise entre 50 et 120.

7. Dispositif de rotation (100) selon l'une quelconque des revendications précédentes,
   **caractérisé en ce que**
   la transmission est conçue comme une transmission à vis sans fin, le premier élément de transmission (130) étant une vis sans fin, en particulier une vis sans fin avec une section de transmission (132, 133) et un élément d'actionnement (131), et le deuxième élément de transmission (140) étant une roue à vis sans fin, le premier axe de rotation ($z_{130}$) de la vis sans fin étant orienté perpendiculairement au deuxième axe de rotation ($z_{140}$) de la roue à vis sans fin.

8. Dispositif de rotation (100) selon l'une quelconque des revendications précédentes,
   **caractérisé en ce que**
   un rapport de transmission (i) entre la vis sans fin (130) et la roue à vis sans fin (140) est sélectionné de telle sorte que, lorsque la roue à vis sans fin (140) est entraînée, il se produit un auto blocage entre la vis sans fin (130) et la roue à vis sans fin (140).

9. Dispositif de rotation (100) selon l'une quelconque des revendications précédentes,
   **caractérisé en ce que**
   la cage de niveau à bulle d'air (120) est formée comme un anneau de cage en une seule pièce ou en plusieurs pièces.

10. Dispositif de rotation (100) selon la revendication 9,
    **caractérisé en ce que**
    la cage de niveau à bulle d'air (120), en particulier l'anneau de cage, présente une surface périphérique (121) qui est dirigée radialement vers l'extérieur à partir du deuxième axe de rotation ($z_{140}$) et qui forme au moins une surface radiale de friction (151) avec une surface de contact radiale (141) du deuxième élément de transmission (140) dirigée radialement vers le deuxième axe de rotation ($z_{140}$) ou en orientation radiale vers l'intérieur.

11. Dispositif de rotation (100) selon l'une des revendications 9 ou 10, **caractérisé en ce que**
    l'anneau de la cage de niveau à bulle d'air (120) comprend un premier élément annulaire (124) et un second élément annulaire (125), dans lequel les éléments annulaires (124, 125) forment conjointement une rainure le long d'une surface circonférentielle (121), rainure dans laquelle le second élément de transmission (140) est monté par friction.

12. Dispositif de rotation (100) selon l'une quelconque des revendications précédentes,
    **caractérisé en ce que**
    le dispositif de rotation (100) comprend un boîtier (101) destiné à recevoir le dispositif de rotation (100), le boîtier (101) pouvant être inséré de manière modulaire dans un dispositif de mesure (200, 201), en particulier un corps de niveau d'eau (220) d'un niveau d'eau.

13. Dispositif de mesure (200, 201), notamment un niveau d'eau, ayant au moins un dispositif de rotation (100) selon l'une quelconque des revendications 1 à 12, comprenant un corps de mesure (220), notamment un corps de niveau d'eau (220), avec au moins une surface de mesure (221) et au moins un niveau

12

à bulle d'air (210), dans lequel le dispositif de rotation (100) est reçu dans le corps de mesure (220) du dispositif de mesure (200, 201).

**14.** Dispositif de mesure (200, 201) selon la revendication 13,

**caractérisé en ce que**

sur le corps de mesure (220), sont agencés un boîtier (101) du dispositif de rotation (100), une cage de niveau à bulle d'air (120) et/ou un autre couvercle (102, 103), un dispositif indicateur (230), par exemple une échelle d'angle, pour fixer ou déterminer un angle d'inclinaison entre le niveau à bulle d'air (210) et la surface de mesure (221).

**15.** Dispositif de mesure (200, 201) selon la revendication 13 ou 14, **caractérisé en ce que**

le premier élément de transmission (130) du dispositif de rotation (100) est conçu comme une vis de réglage avec une section d'engrenage (132, 133) et un élément d'actionnement (131), et l'élément d'actionnement (131) est conçu pour être rétractable dans le corps de mesure (220) du dispositif de mesure (200).

Fig. 1a

Fig. 1b

**Fig. 2**

**Fig. 3**

**Fig. 4a**

**Fig. 4b**

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5177589 A
- WO 2012092611 A2
- US 4335524 A
- WO 2017100054 A1
- WO 1997029345 A1
- US 5177873 A